# EUROPEAN PATENT SPECIFICATION

(11) **EP 4 020 959 B1**
(45) Date of publication and mention of the grant of the patent: **07.08.2024**
(21) Application number: 20877121.2
(22) Date of filing: 17.09.2020
(51) Int. Cl.: G02B 17/08, G02B 27/64, H04N 23/00

(54) **CAMERA MODULE AND TERMINAL DEVICE**
KAMERAMODUL UND ENDGERÄTEVORRICHTUNG
MODULE DE CAMÉRA ET DISPOSITIF TERMINAL

(30) Priority: 14.10.2019 CN 201910973649
(43) Date of publication of application: 29.06.2022
(73) Proprietor: GUANGDONG OPPO MOBILE TELECOMMUNICATIONS CORP., LTD., Dongguan, Guangdong 523860 (CN)
(72) Inventor: CHEN, Wei, Dongguan, Guangdong 523860 (CN)
(74) Representative: Penza, Giancarlo
(86) International application number: PCT/CN2020/115799
(87) International publication number: WO 2021/073346

(56) References cited:
- WO-A1-2011/101649
- CN-A- 104 704 821
- CN-A- 109 819 152
- CN-A- 109 819 152
- CN-A- 109 975 973
- CN-A- 110 661 976
- CN-A- 110 730 285
- US-A1- 2007 196 087

## Description

### TECHNICAL FIELD

The present disclosure relates to the technical field of optical cameras, and particularly to a camera module and a terminal device. The invention is set out in the appended set of claims.

### BACKGROUND

Mobile terminals such as smartphones are generally equipped with camera modules, and high-definition camera modules are increasingly becoming necessary to the mobile terminals. However, as the pixels of the camera module increase, the volume of the lens group increases accordingly. Therefore, a greater driving force is required for achieving the focusing or anti-shake of the camera modules. And the greater driving force causes the volume of the driving component to increase correspondingly, which is not conducive to the miniaturization of the camera modules.

CN109819152A1 discloses a focusing camera module. The disclosed focusing camera module includes a substrate, a bracket, a lens, a photosensitive chip and a piezoelectric deformation component, wherein the bracket is fixed on the substrate, and the lens is fixed on the on the bracket, the photosensitive chip is arranged in the bracket and opposite to the lens, and the piezoelectric deformation component is arranged between the photosensitive chip and the substrate. The above solution can solve the problem that the current focusing camera module is relatively bulky.

US20070196087A1 discloses an image capturing device, including an rectangular image capturing element having long sides and short sides; an image capturing optical system forming an image of a subject on the rectangular image capturing element; a first driving device which moves the rectangular image capturing element in a first direction slanted by a predetermined angle from the long side and the short side of an outer shape of the rectangular image capturing element in a plane perpendicular to an optical axis of the image capturing optical system; and a second driving device which moves the rectangular image capturing element in a second direction slanted by a predetermine angle from the long side and the short side of the outer shape of the rectangular image capturing element in the plane perpendicular to the optical axis of the image capturing optical system, but the second direction differs from the first direction.

### SUMMARY

In view of the above, it is necessary to provide a camera module and a terminal device. The invention is set out in the appended set of claims.

### BRIEF DESCRIPTION OF THE DRAWINGS

In order to more clearly describe the technical solutions of embodiments of the disclosure or those in the related art, drawings needed to be used in the description of the embodiments or the related art will be briefly introduced hereafter. Obviously, the drawings in the following illustrate only some embodiments of the disclosure, and those skilled in the art can obtain other drawings based on these drawings without any creative work.
FIG. 1 is a perspective view of a terminal device in an embodiment;
FIG. 2 is a cross-sectional view of a camera module in an embodiment;
FIG. 3 is a schematic diagram illustrating one state of a driving component of the camera module shown in FIG. 2;
FIG. 4 is a schematic diagram illustrating another state of the driving component of the camera module shown in FIG. 3;
FIG. 5 is a schematic diagram illustrating positions of the driving component, an image sensor, and a circuit board of the camera module in an example useful for understanding the invention but outside the scope of the invention as claimed;
FIG. 6 is a schematic diagram illustrating another state of the driving component of the camera module shown in FIG. 3;
FIG. 7 is a schematic diagram illustrating the positions of the driving component, the image sensor, and the circuit board of the camera module in another embodiment; and
FIG. 8 is a schematic diagram illustrating the structure of a terminal device in an embodiment of the disclosure.

### DETAILED DESCRIPTION OF PREFERRED EMBODIMENTS

In order to facilitate the understanding of the disclosure, the disclosure will be described below comprehensively with reference to the drawings. The drawings show preferred embodiments of the disclosure. However, this disclosure can be implemented in many different ways, rather than being limited to the embodiments described herein. On the contrary, the embodiments are provided just for the purpose of providing thorough and comprehensive understanding of the disclosure.

The term "terminal device" used herein refers to, but is not limited to, devices that can be connected in any one or some of the following connections to receive and/or send communication signals:
(1) Wired connection, for example, the connection is established via Public Switched Telephone Networks (PSTN), Digital Subscriber Line (DSL), a digital cable, and a direct cable; and
(2) Wireless connection, for example, the connection is established via cellular network, Wireless Local Area Network (WLAN), digital television network such as DVB-H network, satellite network, and AM-FM broadcast transmitter.

The terminal devices configured to communicate wirelessly may be referred to as "mobile terminals". Examples of the mobile terminals include, but are not limited to, the following electronic devices:
(1) A satellite phone or cellular phone;
(2) A Personal Communications System (PCS) terminal that can incorporate a cellular radio telephone with capacities of data processing, fax and data communication;
(3) A radio telephone, pager, Internet/Intranet access, Web browser, note book, calendar, Personal Digital Assistant (PDA) equipped with a Global Positioning System (GPS) receiver;
(4) A conventional laptop and/or palmtop receiver; and
(5) A conventional laptop and/or palmtop radio telephone transceiver, etc.

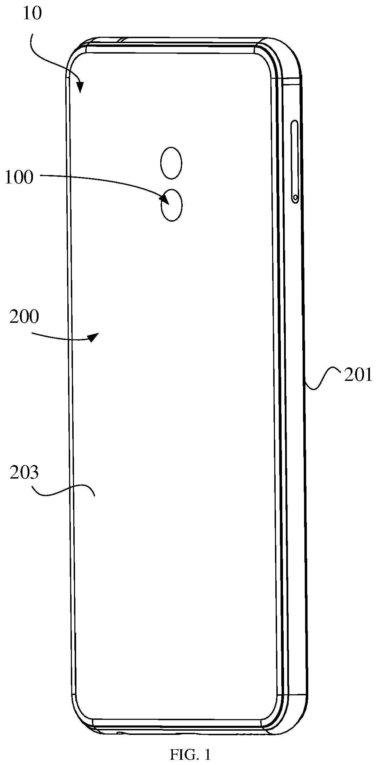

Referring to FIG. 1, in some embodiments, the terminal device 10 is a smart phone. The terminal device 10 includes a camera module 100 and a housing 200. The camera module 100 is disposed in the housing 200, and the camera module 100 may be configured for shooting. For example, in some embodiments, the camera module 100 can provide functions of a front camera, and the user can perform, through the camera module 100, operations such as taking a selfie and making a video call. In other embodiments, the camera module 100 can provide the functions of a rear camera, and the user can perform, through the camera module 100, operations such as close-range shooting, long-range shooting, and video recording. In other embodiments, the terminal device 10 may be a tablet computer, a notebook computer, or the like. Embodiments of the disclosure are described by taking a case where the camera module 100 is a smart phone as an example, but it is understandable that the camera module 100 disclosed in the disclosure is also applicable to other types of terminal devices 10.

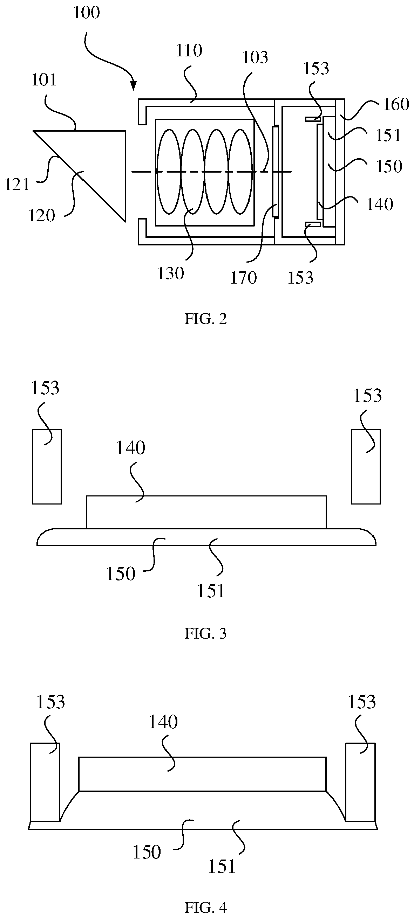

Referring to FIG. 2, the camera module 100 is embodied as a periscopic camera, that is, the light incidence surface 101 of the camera module 100 and the extending direction of the optical axis 103 of the camera module 100 are not perpendicular to each other. For example, referring to FIG. 1, the terminal device 10 includes a display surface 201 and a back surface 203 arranged opposite to each other. The display surface 201 can be configured to display information and provide an interactive interface for the user. The camera module 100 receives incident light from the back surface 203 of the terminal device 10, and the optical axis 103 of the camera module 100 is perpendicular to the thickness direction of the terminal device 10. Therefore, in the extending direction of the optical axis 103, the camera module 100 can have a relatively large length and width, to obtain a long focal length and get a better shooting quality. The camera module 100 of this structure can provide therein a relatively large space for the lenses to move, so as to realize optical zoom, thereby providing a better shooting quality and adapting to more shooting scenes.

Specifically, referring to FIG. 2, the camera module 100 includes a base 110, a reflective element 120, a lens group 130, an image sensor 140, and a driving component 150. The reflective element 120 and the lens group 130 are all mounted on and supported by the base 110. The reflective element 120 is configured for directing the incident light of the camera module 100. The light can be incident on the reflective element 120 and reflected by the reflective element 120 to the lens group 130. The light travelling through the lens group 130 can be further incident on the image sensor 140, so as to convert the optical signal of the light into an electrical signal. After the electrical signal is further processed, an image of the subject can be obtained. The optical axis 103 is determined by the lens group 130, and the extending direction of the optical axis 103 is parallel to or at an acute angle to the light incidence surface 101 of the reflective element 120. The driving component 150 includes a fluid element 151 and a pressing element 153. The pressing element 153 is mounted on and movable relative to the base 110. The image sensor 140 is coupled with the fluid element 151. The pressing element 153 can press the fluid element 151 to deform the fluid element 151, so as to drive the image sensor 140 to move.

The camera module 100 further includes a circuit board 160. The circuit board 160 is connected to the base 110, and the fluid element 151 is connected to the circuit board 160 and located between the image sensor 140 and the circuit board 160. The circuit board 160 is electrically connected with the image sensor 140. The circuit board 160 may be provided with a flexible circuit board, and be electrically connected to a main board of the terminal device 10 through the flexible circuit board, to transmit the image data collected by the camera module 100 to the processor of the terminal device 10 for further processing. Furthermore, the camera module 100 includes a filter element 170. The filter element 170 is installed on the base 110 and located between the lens group 130 and the image sensor 140. The filter element 170 can filter out infrared light, so that the camera module 100 can provide a better shooting quality.

In some embodiments, the reflective element 120 is substantially in a shape of triangular prism, and the reflective element 120, being a prism, includes a reflective surface 121 that is capable of totally reflecting the incident light. The total reflection enables the loss of the incident light after travelling through the reflective element 120 to be reduced, which is beneficial to the better shooting quality. In other embodiments, the reflective element 120, being a prism, includes the reflective surface 121, and the reflective surface 121 is coated with a reflective film to cause the light incident on the reflective surface 121 to be total reflected. In this implementation, the reflective film is an optical film and the processing thereof is relatively easy; therefore, the material requirements for the prism can be reduced, thereby reducing the manufacturing cost of the camera module 100 while providing a relatively high shooting quality.

The fluid element 151 includes a shell and a fluid. The shell is flexible and encloses the fluid therein. The fluid may be a liquid, a gas or a gas-liquid mixture, and is sealed in the shell. The shell may be connected to the image sensor 140 by bonding or other ways, so that the image sensor 140 is driven to move when the fluid element 151 is deformed. The pressing element 153 includes any one of a piezoelectric ceramic element and a magnetostrictive element. Specifically, the piezoelectric ceramic element can change its size under the action of an electric field. Therefore, by controlling the electric field, the pressing element 153 can apply a pressing force to the fluid element 151. The magnetostrictive element can deform through expansion and contraction under the action of a magnetic field. Therefore, by controlling the magnetic field with an electromagnet or other structure, the pressing element 153 can apply the pressing force to the fluid element 151. In some embodiments, the pressing element 153 includes an electromagnet and a permanent magnet. The electromagnet is fixedly mounted on the base 110, and the permanent magnet can move relative to the base 110. When the electromagnet is energized to produce a magnetic field, the permanent magnet can be driven to move and press the fluid element 151. Of course, the pressing element 153 may also include a permanent magnet and a coil. The permanent magnet is fixedly provided on the base 110 and configured to provide a magnetic field. The coil is connected to the base 110 and arranged in the magnetic field, and can move, when being energized, to press the fluid element 151.

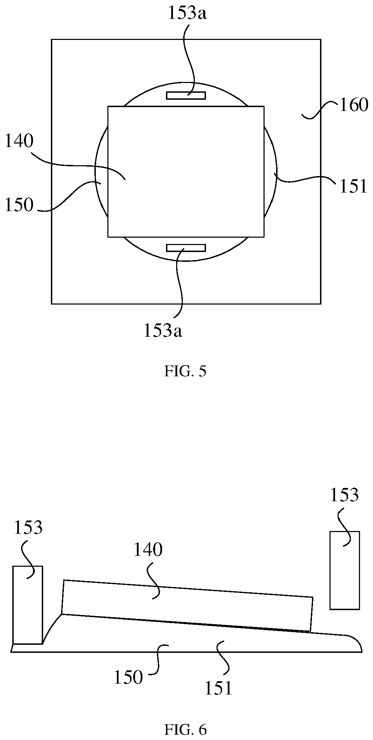

Referring to FIG. 3 and FIG. 4, in some embodiments, when the pressing element 153 presses the fluid element 151 to deform the fluid element 151, the image sensor 140 can be translated along the optical axis 103 to approach or move away from the lens group 130, where translation means that displacements of various parts of the image sensor along the optical axis are equal. Specifically, referring to FIG. 5, in an example useful for understanding the invention but outside the scope of the invention as claimed, the pressing element 153 includes two first pressing elements 153a, and the two first pressing elements 153a are disposed at opposite ends of the fluid element 151. The two first pressing elements 153a can be controlled independently of each other, or can be controlled synchronously, in such a manner that the two first pressing elements 153a produce equal displacements at the same time, to cause the image sensor 140 to perform a translational movement in the extending direction of the optical axis 103. In the camera module 100 of this structure, since the pressing element 153 can be controlled to press the fluid element 151 to drive the image sensor 140 to translate along the optical axis, the focusing function can be realized. For example, when the object distance is changed, based on the imaging principle 1/f = 1/u + 1/v (where f is the focal length of the lens, u is the object distance, and v is the image distance), it can be known that the image distance should also be changed accordingly. By means of the driving component 150, the position of the image sensor 140 can be adjusted to meet the requirements for focusing. Referring to FIG. 5, the two first pressing elements 153a may be arranged symmetrically relative to the optical axis 103. In other embodiments, the number of the first pressing element 153a may be more than two, so as to more conveniently and accurately control the deformation of the fluid element 151, and enable the driving component 150 to make a relatively fast response. Since the deformation of the fluid element 151 is easy to control, and the deformation of the fluid element can be achieved with a relatively small pressing force, the pressing element 153 can have relatively low power consumption, and the structure of the pressing element 153 can be relatively simple, easy to manufacture, and occupy a relatively small volume. In this way, the driving component 150 can provide a relatively large displacement and facilitate the miniaturization of the camera module 100, thereby facilitating the slim design of the terminal device 10.

Further, referring to FIG. 3 and FIG. 6, in some embodiments, when the pressing element 153 presses the fluid element 151 to deform the fluid element 151, the image sensor 140 can be deflected. Specifically, referring to FIG. 5 and FIG. 6, the two first pressing elements 153a can be independently controlled. When one of the first pressing elements 153a presses the fluid element 151, and the other may not press the fluid element 151, the image sensor 140 can be deflected; alternatively, when the two first pressing elements 153a cause unequal displacements to the fluid element 151 through the pressing, the image sensor 140 can be deflected. In the camera module 100 of this structure, since the pressing element 153 can be controlled to press the fluid element 151 to drive the image sensor 140 to deflect, the anti-shake function can be realized, so that clear images can be captured even when the camera module 100 is shaking. For example, the terminal device 10 includes a gyroscope through which the amount of shaking of the terminal device 10 can be detected. When the terminal device 10 is shaking, the driving component 150 can compensate the image sensor 140 according to the amount of shaking, to obtain a clear captured image. Similarly, this anti-shake method can also gain a relatively fast response, and be beneficial to the slim design of the camera module 100 and the terminal device 10.

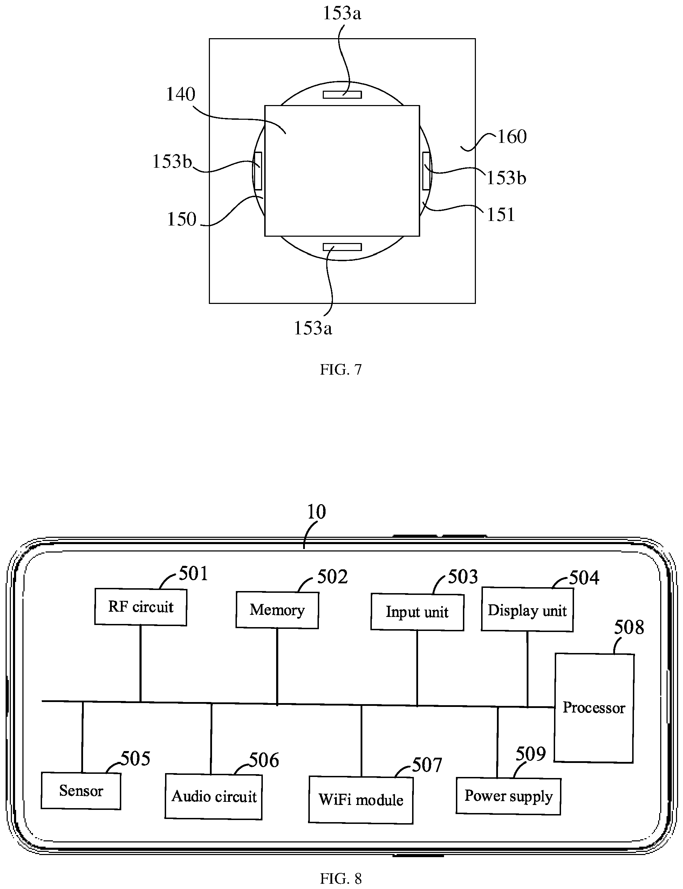

In the case where the two first pressing elements 153a are arranged at the two ends of the fluid element 151 and in central symmetry relative to the optical axis 103, the two first pressing elements 153a can be controlled to drive the image sensor 140 to deflect around a first axis, thereby enabling the anti-shake of the camera module 100 on the first axis. Of course, more than two first pressing elements 153a can be provided to achieve more precise control. Further, referring to FIG. 7, the pressing element 153 further includes two second pressing elements 153b that can be controlled independently of each other, and the two second pressing elements 153b and the two first pressing elements 153a are alternately arranged in a circumferential direction of fluid element 151 and spaced apart from each other. The two second pressing elements 153b are also arranged opposite to each other. The structure and working principle of the second pressing elements 153b may be similar to those of the first pressing elements 153a. The two second pressing elements 153b can also be configured for the focusing of the camera module 100. Furthermore, the two second pressing elements 153b can be controlled to drive the image sensor 140 to deflect around a second axis, thereby enabling the anti-shake of the camera module 100 on the second axis. The first axis and the second axis are perpendicular to each other, or an acute angle is defined between the first and second axes.

Taking a case where the first axis and the second axis are perpendicular to each other as an example, the central angles defined by every two adjacent pressing elements of the first pressing elements 153a and the second pressing elements 153b relative to the optical axis 103 are equal. For example, in an implementation in which there are two first pressing elements 153a and two second pressing elements 153b, each of the first pressing elements 153a and any of its adjacent second pressing elements 153b define a central angle of 90 degrees relative to the optical axis 103. This configuration enables the driving component 150 to be controlled more conveniently, for realizing the anti-shake of the camera module 100 on the first axis and the second axis, thereby obtaining a better anti-shake effect. The gyroscope of the terminal device 10 can detect the amount of shaking of the terminal device 10, and when the terminal device 10 is shaking, the image sensor 140 is compensated on the first axis and the second axis according to the amount of shaking to obtain a clear captured image. Similarly, this anti-shake method can also gain a relatively fast response, and be beneficial to the slim design of the camera module 100 and the terminal device 10.

In the above-mentioned camera module 100, the pressing element 153 can be controlled to press the fluid element 151 to deform the fluid element 151, thereby driving the image sensor 140 to move. The movement of the image sensor 140 enables the focusing or anti-shake function of the camera module 100 to be achieved. The driving component 150 has a relatively small volume and a simple structure, and the deformation of the fluid element is easy to control. Therefore, the movement of the image sensor 140 can be easily controlled with a relatively low power consumption, to obtain a faster focusing speed or a better anti-shake effect. The aforementioned driving component 150 is also applicable to large-volume lenses and large-area image sensors 140, and is beneficial to simplify the structure of the camera module 100, reduce the size of the camera module 100, and reduce the power consumption of the camera module 100.

Further, in some embodiments, the camera module 100 includes a voice coil motor. The voice coil motor is disposed on the base 110 and can drive the lens group 130 to move. Specifically, the voice coil motor includes a coil and a magnet. The coil is connected to the lens group 130, and the magnet is connected to the base 110 and configured to produce a magnetic field. When the coil is energized, it can drive the lens group 130 to move along the optical axis. Further, the voice coil motor can drive one or more of the lenses in the lens group 130 to move along the optical axis 103 to realize the optical zoom.

Referring to FIG. 8, FIG. 8 is a schematic structural diagram of a terminal device 10 provided by the embodiments of the disclosure. The terminal device 10 may include a radio frequency (RF) circuit 501, a memory 502 including one or more computer-readable storage media, an input unit 503, a display unit 504, a sensor 505, an audio circuit 506, a wireless fidelity (WiFi) module 507, a processor 508 with one or more processing cores, a power supply 509 and other components. Those skilled in the art can understand that the structure of the terminal device 10 shown in FIG. 8 does not limit the terminal device 10, more or less components than those shown in the figure can be included, or some of the components can be combined, or a different layout of the components can be adopted.

The radio frequency circuit 501 can be used to send and receive information, or to receive and send signals during a call. In particular, after receiving downlink information from a base station, the radio frequency circuit forwards such information to one or more processors 508 for processing; in addition, the radio frequency circuit sends uplink data to the base station. Generally, the radio frequency circuit 501 includes, but is not limited to, an antenna, at least one amplifier, a tuner, one or more oscillators, a Subscriber Identity Module (SIM) card, a transceiver, a coupler, and a low noise amplifier (LNA), a duplexer, etc. In addition, the radio frequency circuit 501 can also communicate with the network and other devices through wireless communication. The wireless communication can use any communication standard or protocol, including but not limited to Global System of Mobile communication (GSM), General Packet Radio Service (GPRS), Code Division Multiple Access (CDMA), Wideband Code Division Multiple Access (WCDMA), Long Term Evolution (LTE), Email, Short Message Service (SMS), etc.

The memory 502 can be used to store application programs and data. The application program stored in the memory 502 contains executable codes. Application programs can be composed of various functional modules. The processor 508 executes various functional applications and data processing by running the application programs stored in the memory 502. The memory 502 may mainly include a program storage area and a data storage area. The program storage area may store an operating system, an application program required by at least one function (such as a sound playback function, and an image playback function), and the like. The data storage area can store data created by the terminal device 100 in use (such as audio data, and phone book) and the like. In addition, the memory 502 may include a high-speed random access memory, and may also include a non-volatile memory such as at least one magnetic disk storage device or a flash memory device, or may include other volatile solid-state storage devices. Correspondingly, the memory 502 may further include a memory controller to provide access to the memory 502 for the processor 508 and the input unit 503.

The input unit 503 can be used to receive input number information, character information, or user characteristic information (such as fingerprints), and generate a keyboard input, mouse input, joystick input, optical or trackball signal input related to user settings and function control. Specifically, in a specific implementation, the input unit 503 may include a touch-sensitive surface and other input devices. The touch-sensitive surface is also called a touch screen or a trackpad, and can collect touch operations performed by the user on or near it (for example, operations that the user performs on or near the touch-sensitive surface with any suitable objects or accessories such as his/her finger(s) and a stylus), and drive a corresponding connection device according to the preset program. Optionally, the touch-sensitive surface may include two parts: a touch detection device and a touch controller. Among them, the touch detection device detects the user's touch position, detects the signal generated by the touch operation, and transmits the signal to the touch controller. The touch controller receives the touch information from the touch detection device, converts it into contact coordinates, and then sends them to the processor 508. The touch controller can also receive commands sent by the processor 508 and execute them.

The display unit 504 may be used to display information input by the user or information provided to the user, and various graphical user interfaces of the terminal device 10. These graphical user interfaces may be composed of graphics, text, icons, videos, and any combination thereof. The display unit 504 may include a display panel. Optionally, the display panel may be configured in the form of a Liquid Crystal Display (LCD), an Organic Light-Emitting Diode (OLED) and the like. Further, the touch-sensitive surface can cover the display panel. When the touch-sensitive surface detects a touch operation on or near it, it transmits information related to the operation to the processor 508 to determine the type of the touch event. Then, the processor 508 controls corresponding visual output to be provided on the display panel, according to the type of the touch event. Although the touch-sensitive surface and the display panel are used as two independent components to realize the input and input functions in FIG. 8, in some embodiments, the touch-sensitive surface and the display panel may be integrated to realize the input and output functions.

The terminal device 10 may also include at least one sensor 505, such as a light sensor, a motion sensor, and other sensors. Specifically, the light sensor may include an ambient light sensor and a proximity sensor. The ambient light sensor may be configured to adjust the brightness of the display panel according to the luminance of the ambient light, and the proximity sensor may be configured to close the display panel and/or backlight when the terminal device 10 is moved to the ear of the user. As one kind of the motion sensors, a gravity acceleration sensor can detect the magnitude of acceleration in various directions (usually in three axes), and can detect the magnitude and direction of gravity when it is stationary. The gravity acceleration sensor can be used for applications related to identification of the mobile phone posture (such as switching between landscape and portrait, related games, and calibration of magnetometer postures), functions related to vibration recognition (such as pedometer, and knocking), and the like. As for other sensors, such as gyroscope, barometer, hygrometer, thermometer, and infrared sensor, which can also configured for the terminal device 10, they will not be detailed here.

The audio circuit 506 can provide an audio interface between the user and the terminal device 10 through a speaker and a microphone. The audio circuit 506 can convert the received audio data into an electric signal, and transmit it to the speaker, so that the speaker converts it into a sound signal for output. In addition, the microphone converts the collected sound signal into an electric signal, and transmits it the audio circuit 506 for being converted into audio data. After being processed by the processor 508, the audio data is sent to for example another terminal device 10 through the radio frequency circuit 501, or output to the memory 502 for further processing. The audio circuit 506 may also include an earphone holder to provide communication between a peripheral earphone and the terminal device 10.

Wireless fidelity (WiFi) is a short-distance wireless transmission technology. Through the wireless fidelity module 507, the terminal device 10 can help users send and receive emails, browse webpages, and access streaming media. It provides users with wireless broadband Internet access. Although FIG. 8 shows the wireless fidelity module 507, it is understandable that this is not a necessary component of the terminal device 10, and can be omitted as needed without changing the essence of the disclosure.

The processor 508 is the control center of the terminal device 10. It uses various interfaces and lines to connect the various parts of the entire terminal device 10. By running or executing the applicant programs stored in the memory 502 and by invoking data stored in the memory 502, various functions and data processing of the terminal device 10 can be implemented to monitor the terminal device 10 as a whole. Optionally, the processor 508 may include one or more processing cores. Preferably, the processor 508 may integrate an application processor and a modem processor, where the application processor mainly processes the operating system, user interface, application programs, and the like, and the modem processor mainly deals with wireless communication. It can be understood that the foregoing modem processor may not be integrated into the processor 508.

The terminal device 10 also includes the power supply 509 for supplying power to the various components. Preferably, the power supply 509 may be logically connected to the processor 508 through a power management system, so that functions such as management of charging, discharging, and power consumption can be realized through the power management system. The power supply 509 may also include one or more of DC or AC power supplies, a recharging system, a power failure detection circuit, a power converter or inverter, a power status indicator and other devices.

Although not shown in FIG. 8, the terminal device 10 may also include a Bluetooth module or the like, which will not be detailed here. During specific implementation, each of the above modules can be implemented as independent entities, or can be combined arbitrarily as one or several entities. For the specific implementation of each of the above modules, reference may be made to the previous method embodiments, which will not be repeated here.

The technical features of the above-mentioned embodiments can be combined arbitrarily. For concise, not all possible combinations of the various technical features in the above-mentioned embodiments are described. However, as long as there is no contradiction in the combination of these technical features, they should be considered as falling within the scope of this specification.

The above-mentioned embodiments only illustrate several implementations of the present disclosure, and the description thereof is relatively specific and detailed, but they should not be understood as limiting the scope of the disclosure. It should be noted that, for those of ordinary skill in the art, several modifications and improvements can also be made without departing from the concept of the present disclosure, and these all fall within the protection scope of the disclosure. The scope of protection is defined in the appended claims.

## Claims

1. A camera module (100), comprising:
a reflective element (120), configured to reflect incident light;
a lens group (130), configured to deliver the incident light reflected by the reflective element (120), and an extension direction of an optical axis (103) of the lens group (130) is parallel to or at an acute angle to a light incidence surface (101) of the reflective element (120);
an image sensor (140), configured to capture the incident light delivered by the lens group (130); and
a driving component (150), comprising a fluid element (151) and a pressing element (153), wherein the image sensor (140) is coupled with the fluid element (153), and the fluid element (151) is deformable based on displacement of the pressing element (153) to move the image sensor (140);
**characterized in that**,
the pressing element (153) comprises two first pressing elements (153a) and two second pressing elements (153b), the two second pressing elements (153b) and the two first pressing elements (153a) are arranged alternatively along a circumferential direction of the fluid element (151) and spaced apart from each other, two first pressing elements (153a) are arranged opposite to each other, and the two second pressing elements (153b) are arranged opposite to each other; and
when only one of the two first pressing elements (153a) is controlled to deform the fluid element (151), the image sensor (140) is deflectable around a first axis to realize anti-shake function of the camera module (100) on the first axis; when only one of the two second pressing elements (153b) is controlled to deform the fluid element (151), the image sensor (140) is deflectable around a second axis to realize anti-shake function of the camera module (100) on the second axis; and the first axis is perpendicular or at an acute angle to the second axis.

2. The camera module (100) as claimed in claim 1, wherein the fluid element (151) comprises a shell and a fluid, the shell is flexible and encloses the fluid therein, and the shell is connected to the image sensor (140).

3. The camera module (100) as claimed in claim 2, wherein when the two first pressing elements (153a) are controlled to produce equal displacements at the same time to the fluid element (151), the image sensor (140) is enabled to translate along the optical axis (103) to approach or move away from the lens group (130).

4. The camera module (100) as claimed in claim 2, wherein when the two first pressing elements (153a) are controlled to produce unequal displacements to the fluid element (151), the image sensor (140) is deflectable around the first axis.

5. The camera module (100) as claimed in claim 4,
wherein central angles defined by every two adjacent pressing elements of the first pressing elements (153a) and the second pressing elements (153b) with respect to the optical axis (103) are equal.

6. The camera module (100) as claimed in claim 5, wherein when the two first pressing elements (153a) and the two second pressing elements (153b) are controlled to produce equal displacements at the same time to the fluid element (151), the image sensor (140) is enabled to translate along the optical axis (103) of the lens group (130) to realize focusing function of the camera module (100); and
when the two second pressing elements (153b) are controlled to produce unequal displacements to the fluid element (151), the image sensor (140) is deflectable around the second axis to realize the anti-shake function of the camera module (100) on the second axis

7. The camera module (100) as claimed in claim 6, wherein the two first pressing elements (153a) are independently controlled to drive the image sensor (140) to translate or to deflect around the first axis, and the two second pressing elements (153b) are independently controlled to drive the image sensor (140) to translate or to deflect around the second axis.

8. The camera module (100) as claimed in any one of claims 1 to 7, wherein the camera module (100) comprises:
a base (110) on which the reflective element (120), the lens group (130) and the pressing element (153) are mounted;
a circuit board (160), the circuit board (160) being connected to the base (110) and electrically connected to the image sensor (140), and the fluid element (151) being connected to the circuit board (160) and located between the image sensor (140) and the circuit board (160); and
a filter element (170), the filter element (170) being mounted on the base (110) and located between the lens group (130) and the image sensor (140).

9. The camera module (100) as claimed in claim 8, wherein the camera module (100) further comprises a voice coil motor, the lens group (130) comprises a plurality of lenses, and the voice coil motor is arranged on the base (110) and configured to drive the lens group (130) to move or drive at least one of the lenses to move to realize optical zoom of the camera module (100).

10. The camera module (100) as claimed in any of claims 1 to 9, wherein the pressing element (153) comprises any one selected from a group consisting of a piezoelectric ceramic element and a magnetostrictive element.

11. The camera module (100) as claimed in claim 8, wherein the pressing element (153) comprises an electromagnet and a permanent magnet, the electromagnet is fixedly connected to the base (110), and the electromagnet is configured to, when being energized, drive the permanent magnet to move relative to the base (110), to press the fluid element (151).

12. The camera module (100) as claimed in claim 8, wherein the pressing element (153) comprises a permanent magnet and a coil, the permanent magnet is fixedly connected to the base (110) and configured to produce a magnetic field, the coil is connected to the base (110) and arranged in the magnetic field, and the coil is enabled to move when being energized, to press the fluid element (151).

13. The camera module (100) as claimed in any one of claims 1 to 7, wherein the reflective element (120) is a prism and comprises a reflective surface (121), and the reflective surface (121) is capable of totally reflecting the incident light.

14. The camera module (100) as claimed in any one of claims 1 to 7, wherein the reflective element (120) is a prism and comprises a reflective surface (121), and the reflective surface (121) is coated with a reflective film to cause light incident on the reflective surface (121) to be totally reflected.

15. A terminal device (10), comprising a housing (200); and the camera module (100) as claimed in any one of claims 1-14, the camera module (100) being arranged in the housing (200).

## Patentansprüche

1. Kameramodul (100), Folgendes umfassend:
ein reflektierendes Element (120), das dafür konfiguriert ist, einfallendes Licht zu reflektieren,
eine Linsengruppe (130), die dafür konfiguriert ist, das von dem reflektierenden Element (120) reflektierte einfallende Licht abzugeben, wobei eine Erstreckungsrichtung einer optischen Achse (103) der Linsengruppe (130) parallel oder in einem spitzen Winkel zu einer Lichteinfallsfläche (101) des reflektierenden Elements (120) liegt,
einen Bildsensor (140), der dafür konfiguriert ist, das von der Linsengruppe (130) abgegebene einfallende Licht zu erfassen, und
eine Antriebskomponente (150), die ein Fluidelement (151) und ein Presselement (153) umfasst, wobei der Bildsensor (140) mit dem Fluidelement (153) gekoppelt ist und das Fluidelement (151) basierend auf einer Verlagerung des Presselements (153) verformbar ist, um den Bildsensor (140) zu bewegen,
**dadurch gekennzeichnet, dass**
das Presselement (153) zwei erste Presselemente (153a) und zwei zweite Presselemente (153b) umfasst, wobei die zwei zweiten Presselemente (153b) und die zwei ersten Presselemente (153a) entlang einer Umfangsrichtung des Fluidelements (151) abwechselnd angeordnet und voneinander beabstandet sind, wobei die zwei ersten Presselemente (153a) einander gegenüber angeordnet sind und die zwei zweiten Presselemente (153b) einander gegenüber angeordnet sind, und
der Bildsensor (140), wenn nur eines der zwei ersten Presselemente (153a) gesteuert wird, um das Fluidelement (151) zu verformen, um eine erste Achse ablenkbar ist, um eine Anti-Shake-Funktion des Kameramoduls (100) an der ersten Achse umzusetzen, der Bildsensor (140), wenn nur eines der zwei zweiten Presselemente (153b) gesteuert wird, um das Fluidelement (151) zu verformen, um eine zweite Achse ablenkbar ist, um eine Anti-Shake-Funktion des Kameramoduls (100) an der zweiten Achse umzusetzen, und die erste Achse senkrecht oder in einem spitzen Winkel zu der zweiten Achse liegt.

2. Kameramodul (100) nach Anspruch 1, wobei das Fluidelement (151) eine Ummantelung und ein Fluid umfasst, wobei die Ummantelung flexibel ist und das Fluid in sich einschließt und die Ummantelung mit dem Bildsensor (140) verbunden ist.

3. Kameramodul (100) nach Anspruch 2, wobei der Bildsensor (140), wenn die zwei ersten Presselemente (153a) gesteuert werden, um gleiche Verlagerungen zur gleichen Zeit an dem Fluidelement (151) zu erzeugen, in die Lage versetzt ist, sich entlang der optischen Achse (103) zu verschieben, um sich der Linsengruppe (130) zu nähern oder sich von ihr weg zu bewegen.

4. Kameramodul (100) nach Anspruch 2, wobei der Bildsensor (140), wenn die zwei ersten Presselemente (153a) gesteuert werden, um ungleicher Verlagerungen an dem Fluidelement (151) zu erzeugen, um die erste Achse ablenkbar ist.

5. Kameramodul (100) nach Anspruch 4,
wobei Mittelpunktswinkel, die durch jeweils zwei benachbarte Presselement der ersten Presselemente (153a) und der zweiten Presselemente (153b) in Bezug auf die optische Achse (103) gebildet sind, gleich sind.

6. Kameramodul (100) nach Anspruch 5, wobei der Bildsensor (140), wenn die zwei ersten Presselemente (153a) und die zwei zweiten Presselemente (153b) gesteuert werden, um gleiche Verlagerungen zur gleichen Zeit an dem Fluidelement (151) zu erzeugen, in die Lage versetzt ist, sich entlang der optischen Achse (103) der Linsengruppe (130) zu verschieben, um eine Fokussierungsfunktion des Kameramoduls (100) umzusetzen, und
der Bildsensor (140), wenn die zwei zweiten Presselemente (153b) gesteuert werden, um ungleiche Verlagerungen an dem Fluidelement (151) zu erzeugen, um die zweite Achse ablenkbar ist, um die Anti-Shake-Funktion des Kameramoduls (100) an der zweiten Achse umzusetzen.

7. Kameramodul (100) nach Anspruch 6, wobei die zwei ersten Presselemente (153a) unabhängig gesteuert werden, um den Bildsensor (140) anzutreiben, sich um die erste Achse zu verschieben oder abzulenken, und die zwei zweiten Presselemente (153b) unabhängig gesteuert werden, um den Bildsensor (140) anzutreiben, sich um die zweite Achse zu verschieben oder abzulenken.

8. Kameramodul (100) nach einem der Ansprüche 1 bis 7, wobei das Kameramodul (100) Folgendes umfasst:
eine Basis (110), an der das reflektierende Element (120), die Linsengruppe (130) und das Presselement (153) montiert sind,
eine Leiterplatte (160), wobei die Leiterplatte (160) mit der Basis (110) verbunden und elektrisch mit dem Bildsensor (140) verbunden ist, und das Fluidelement (151) mit der Leiterplatte (160) verbunden ist und sich zwischen dem Bildsensor (140) und der Leiterplatte (160) befindet, und
ein Filterelement (170), wobei das Filterelement (170) an die Basis (110) montiert ist und sich zwischen der Linsengruppe (130) und dem Bildsensor (140) befindet.

9. Kameramodul (100) nach Anspruch 8, wobei das Kameramodul (100) ferner einen Schwingspulenmotor umfasst, die Linsengruppe (130) mehrere Linsen umfasst und der Schwingspulenmotor an der Basis (110) angeordnet und dafür konfiguriert ist, die Linsengruppe (130) anzutreiben, mindestens eine der Linsen zu bewegen oder anzutreiben, sich zu bewegen, um einen optischen Zoom des Kameramoduls (100) umzusetzen.

10. Kameramodul (100) nach einem der Ansprüche 1 bis 9, wobei das Presselement (153) etwas umfasst, das aus einer Gruppe ausgewählt ist, die aus einem piezoelektrischen keramischen Element und einem magnetorestriktiven Element besteht.

11. Kameramodul (100) nach Anspruch 8, wobei das Presselement (153) einen Elektromagneten und einen Dauermagneten umfasst, wobei der Elektromagnet fest mit der Basis (110) verbunden ist und der Elektromagnet dafür konfiguriert ist, im erregten Zustand den Dauermagneten anzutreiben, sich relativ zu der Basis (110) zu bewegen, um auf das Fluidelement (151) zu pressen.

12. Kameramodul (100) nach Anspruch 8, wobei das Presselement (153) einen Dauermagneten und eine Spule umfasst, wobei der Elektromagnet fest mit der Basis (110) verbunden und dafür konfiguriert ist, ein Magnetfeld zu erzeugen, die Spule mit der Basis (110) verbunden und in dem Magnetfeld angeordnet ist und die Spule in die Lage versetzt ist, sich im erregten Zustand zu bewegen, um auf das Fluidelement (151) zu pressen.

13. Kameramodul (100) nach einem der Ansprüche 1 bis 7, wobei das reflektierende Element (120) ein Prisma ist und eine reflektierende Oberfläche (121) umfasst und die reflektierende Oberfläche (121) in der Lage ist, das einfallende Licht total zu reflektieren.

14. Kameramodul (100) nach einem der Ansprüche 1 bis 7, wobei das reflektierende Element (120) ein Prisma ist und eine reflektierende Oberfläche (121) umfasst und die reflektierende Oberfläche (121) mit einem reflektierenden Film überzogen ist, um zu bewirken, dass Licht, das auf die reflektierende Oberfläche (121) fällt, total reflektiert wird.

15. Endgerät (10), ein Gehäuse (200) und das Kameramodul (100) nach einem der Ansprüche 1 bis 14 umfassend, wobei das Kameramodul (100) in dem Gehäuse (200) angeordnet ist.

## Revendications

1. Module de caméra (100), comprenant :
un élément réfléchissant (120), configuré pour réfléchir de la lumière incidente ;
un groupe de lentilles (130), configuré pour distribuer la lumière incidente réfléchie par l'élément réfléchissant (120), et une direction d'extension d'un axe optique (103) du groupe de lentilles (130) est parallèle ou à un angle aigu par rapport à une surface d'incidence de lumière (101) de l'élément réfléchissant (120) ;
un capteur d'image (140), configuré pour capturer la lumière incidente distribuée par le groupe de lentilles (130) ; et
un composant d'entraînement (150), comprenant un élément de fluide (151) et un élément de pression (153), dans lequel le capteur d'image (140) est couplé à l'élément de fluide (153), et l'élément de fluide (151) est déformable sur la base d'un déplacement de l'élément de pression (153) pour mouvoir le capteur d'image (140) ;
**caractérisé en ce que**,
l'élément de pression (153) comprend deux premiers éléments de pression (153a) et deux deuxièmes éléments de pression (153b), les deux deuxièmes éléments de pression (153b) et les deux premiers éléments de pression (153a) sont agencés en alternance le long d'une direction circonférentielle de l'élément de fluide (151) et espacés les uns des autres, deux premiers éléments de pression (153a) sont agencés à l'opposé l'un de l'autre, et les deux éléments de pression (153b) sont agencés à l'opposé l'un de l'autre ; et
lorsque seulement un des deux premiers éléments de pression (153a) est commandé pour déformer l'élément de fluide (151), le capteur d'image (140) peut être dévié autour d'un premier axe pour réaliser une fonction anti-tremblement du module de caméra (100) sur le premier axe ; lorsque seulement un des deux deuxièmes éléments de pression (153b) est commandé pour déformer l'élément de fluide (151), le capteur d'image (140) peut être dévié autour d'un deuxième axe pour réaliser une fonction anti-tremblement du module de caméra (100) sur le deuxième axe ; et le premier axe est perpendiculaire ou à un angle aigu par rapport au deuxième axe.

2. Module de caméra (100) selon la revendication 1, dans lequel l'élément de fluide (151) comprend une coque et un fluide, la coque est souple et renferme le fluide en elle, et la coque est connectée au capteur d'image (140).

3. Module de caméra (100) selon la revendication 2, dans lequel lorsque les deux premiers éléments de pression (153a) sont commandés pour produire des déplacements égaux en même temps que l'élément de fluide (151), le capteur d'image (140) est activé pour translater le long de l'axe optique (103) afin de s'approcher ou de s'éloigner du groupe de lentilles (130) .

4. Module de caméra (100) selon la revendication 2, dans lequel lorsque les deux premiers éléments de pression (153a) sont commandés pour produire des déplacements inégaux vers l'élément de fluide (151), le capteur d'image (140) peut être dévié autour du premier axe.

5. Module de caméra (100) selon la revendication 4,
dans lequel des angles centraux définis par les deux éléments de pression adjacents des premiers éléments de pression (153a) et des deuxièmes éléments de pression (153b) par rapport à l'axe optique (103) sont égaux.

6. Module de caméra (100) selon la revendication 5, dans lequel lorsque chacun des deux premiers éléments de pression (153a) et les deux deuxièmes éléments de pression (153b) sont commandés pour produire des déplacements égaux en même temps vers l'élément de fluide (151), le capteur d'image (140) est activé pour translater long de l'axe optique (103) du groupe de lentilles (130) afin de réaliser une fonction de mise au point du module de caméra (100) ; et
lorsque les deux deuxièmes éléments de pression (153b) sont commandés pour produire des déplacements inégaux vers l'élément de fluide (151), le capteur d'image (140) peut être dévié autour du deuxième axe afin de réaliser la fonction anti-tremblement du module de caméra (100) sur le deuxième axe.

7. Module de caméra (100) selon la revendication 6, dans lequel les deux premiers éléments de pression (153a) sont commandés indépendamment pour entraîner le capteur d'image (140) à translater ou à dévier autour du premier axe, et les deux deuxièmes éléments de pression (153b) sont commandés indépendamment pour entraîner le capteur d'image (140) à translater ou à dévier autour du deuxième axe.

8. Module de caméra (100) selon l'une quelconque des revendications 1 à 7, dans lequel le module de caméra (100) comprend :
une base (110) sur laquelle l'élément réfléchissant (120), le groupe de lentilles (130) et l'élément de pression (153) sont montés ;
une carte de circuit imprimé (160), la carte de circuit imprimé (160) étant connectée à la base (110) et connectée électriquement au capteur d'image (140), et l'élément de fluide (151) étant connecté à la carte de circuit imprimé (160) et situé entre le capteur d'image (140) et la carte de circuit imprimé (160) ; et
un élément de filtre (170), l'élément de filtre (170) étant monté sur la base (110) et situé entre le groupe de lentilles (130) et le capteur d'image (140).

9. Module de caméra (100) selon la revendication 8, dans lequel le module de caméra (100) comprend en outre un moteur à bobine acoustique, le groupe de lentilles (130) comprend une pluralité de lentilles, et le moteur à bobine acoustique est agencé sur la base (110) et configuré pour entraîner le groupe de lentilles (130) à mouvoir ou entraîner au moins l'une des lentilles à se mouvoir pour réaliser un zoom optique du module de caméra (100).

10. Module de caméra (100) selon l'une quelconque des revendications 1 à 9, dans lequel l'élément de pression (153) comprend un élément quelconque sélectionné dans un groupe constitué d'un élément céramique piézoélectrique et d'un élément magnétostrictif.

11. Module de caméra (100) selon la revendication 8, dans lequel l'élément de pression (153) comprend un électroaimant et un aimant permanent, l'électroaimant est connecté de manière fixe à la base (110), et l'électroaimant est configuré pour, lorsqu'il est excité, entraîner l'aimant permanent à se mouvoir relativement à la base (110), afin de presser l'élément de fluide (151).

12. Module de caméra (100) selon la revendication 8, dans lequel l'élément de pression (153) comprend un aimant permanent et une bobine, l'aimant permanent est connecté de manière fixe à la base (110) et configuré pour produire un champ magnétique, la bobine est connectée à la base (110) et agencée dans le champ magnétique, et la bobine est activée pour se mouvoir lorsqu'elle est excitée, pour presser l'élément de fluide (151).

13. Module de caméra (100) selon l'une quelconque des revendications 1 à 7, dans lequel l'élément réfléchissant (120) est un prisme et comprend une surface réfléchissante (121), et la surface réfléchissante (121) est capable de réfléchir totalement la lumière incidente.

14. Module de caméra (100) selon l'une quelconque des revendications 1 à 7, dans lequel l'élément réfléchissant (120) est un prisme et comprend une surface réfléchissante (121), et la surface réfléchissante (121) est revêtue d'un film réfléchissant pour amener la lumière incidente sur la surface réfléchissante (121) à être totalement réfléchie.

15. Dispositif terminal (10), comprenant un boîtier (200) ; et le module de caméra (100) selon l'une quelconque des revendications 1 à 14, le module de caméra (100) étant agencé dans le boîtier (200).
